(19) Europäisches Patentamt
European Patent Office
Office européen des brevets

(11) **EP 4 163 859 A1**

(12) **EUROPEAN PATENT APPLICATION**

(43) Date of publication:
**12.04.2023 Bulletin 2023/15**

(51) International Patent Classification (IPC):
**G06Q 40/04** *(2012.01)*

(21) Application number: **21201736.2**

(52) Cooperative Patent Classification (CPC):
**G06Q 40/04**

(22) Date of filing: **08.10.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bondify B.V.**
**3013AK Rotterdam (NL)**

(72) Inventor: **Verbene, Balder**
**3013AK Rotterdam (NL)**

(74) Representative: **Dentons UK and Middle East LLP**
**One Fleet Place**
**London EC4M 7WS (GB)**

(54) **ELECTRONIC AUCTION SYSTEM**

(57)     The present invention relates to a computer-implemented method for creating electronic bidding data for electronic auctions in which multiple quantities are offered, the method comprising: receiving (101) input data from a user, wherein the input data comprises at least a first price-quantity pair (1) and a second price-quantity pair (3); interpolating (102) a price-quantity curve (30) between the first and second price-quantity pairs (1, 3); providing (103) a visual user interface (21) displaying a graphical representation of the price-quantity curve (30); and modifying (104) the price-quantity curve (30) responsive to manipulation of the graphical representation by the user.

Fig. 3

**Description**

The present application relates generally to electronic auctions systems. In particular, the present invention relates to creating electronic bidding data and matching electronic bidding data for electronic auctions in which multiple quantities are offered.

Background

When multiple quantities of homogenous quality goods are offered, bidders place bids indicating a desired price-quantity combination (x number of items for y price). Buyers in primary markets are usually price sensitive and will want to acquire larger quantities if the price per item is lower. However, known systems provide only static, fixed bidding in the form of explicit values that are not necessarily aligned with quantity and price decisions made by the seller. These electronic auctions struggle with imperfect supply-demand matching causing allocative inefficiencies.

Generally, the price-quantity that buyers are interested in, the price/quantity that they place orders for, and the price/quantity they are allocated are not equal. Bidders can only guesstimate how many items they will be allocated at what price. Whether their ultimate price-quantity combination is a match with their desired price-quantity combination is matter of chance. The resulting imperfection may be expressed as:

$$P_{interest} \times Q_{interest} \neq P_{ordered} \times Q_{ordered} \neq P_{allocated} \times Q_{allocated}.$$

Current auction systems do not provide the possibility to create electronic bidding data with price-quantity relationships. Current systems usually impose constraints on the number of bids that can be entered and/or require compatibility with a matching engine when it comes to the bid format. Furthermore, known bidding systems do not provide an efficient way for entering a plurality of bidding data while allowing a user to quickly grasp the nature of the data and make amendments without re-entering bidding data.

In view of the limitations of the prior art, the technical problem underlying the present invention may be seen in the creation and matching of electronic bidding data for electronic auctions in which multiple quantities are offered. Therefore, a technical tool is needed that is easy in handling and facilitates a fast and accurate data input and matching for a user.

The embodiments described below are not limited to implementations which solve any or all of the disadvantages of the known approaches described above.

Summary

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

The present disclosure provides a method for creating electronic bidding data for electronic auctions in which multiple quantities are offered. An underlying user interface and the presented content credibly assist the user in making data entry more efficient and performing a reality check by means of a continued and guided human-machine interaction process. The present disclosure further provides a corresponding interactive display. The present disclosure further provides a method for matching electronic bidding data for electronic auctions in which multiple quantities are offered. The bidding process is more accurate and remedies allocative inefficiencies. The present disclosure further provides a corresponding matching engine.

First, the terminology used to describe electronic auction systems and electronic bidding data will be explained.

An electronic auction is a transaction between a seller-user and a bidder-user that takes place on an electronic marketplace. In multi-item auctions, auction items can be fungible items, such as any vendible good, raw material, service, financial instrument, asset, property, and anything else that may be bought or sold. A fungible item is one that is of homogenous quality and of divisible quantity.

In auctions where multiple quantities of homogenous quality are offered, bids can be submitted in the form of a price-quantity combination (or price-quantity pair) stipulating both the (maximum) price the potential bidder-user is willing to pay (bid price) and the quantity he is willing to purchase at that price (bid quantity). Similarly, asks (offers) can be submitted in the form of a price-quantity combination (or price-quantity pair) stipulating both the (minimum) price the seller is willing to take for the specified quantity. A price may also include a price derivative (such as a future price).

A price-quantity curve is defined as a curve that passes through at least two points, wherein the points are price-quantity combinations. The price-quantity curve is a connecting line between the at least two price quantity combinations. The price-quantity curve may optionally pass through a plurality of points. The price-quantity curve can be straight, curved or composed of straight and/or curved segments with different slopes and/or curvatures. The price-quantity curve may be calculated and/or stored as one or more line segment equations. A graphical representation of the price-quantity curve may be displayed and modified via a visual user interface. The one or more line segment equations may be generated through interpolation and/or changed through modification of the graphical representation of the price-quantity curve. Modification of the price-quantity curve may result in calculated changes of the line segment equation(s). A price-quantity curve may be submitted as a bid line or an ask line in an electronic auction.

A matching engine or matching system is an electronic system that matches buy and sell orders. Such buy and sell orders may be entered by bidder-users and seller-users via a visual user interface. Buy and sell orders may include singular bid and ask points and/or bid and ask lines.

The present invention is based on the finding that electronic bidding information with price-quantity relationships may be created by means of a guided human-machine interaction process that allows efficient data entry and allows a user to quickly grasp the nature of the data. Furthermore, matching of buy and sell orders that correspond to electronic bidding information with price quantity relationships provides for a more accurate bidding process and reduces allocative inefficiencies.

In a first aspect, the present disclosure provides a computer-implemented method for creating electronic bidding data for electronic auctions in which multiple quantities are offered, the method comprising: receiving input data from a user, wherein the input data comprises at least a first price-quantity pair and a second price-quantity pair; interpolating a price-quantity curve between the first and second price-quantity pairs; providing a visual user interface displaying a graphical representation of the price-quantity curve; and modifying the price-quantity curve responsive to manipulation of the graphical representation by the user. Creating price-quantity curves instead of using only price-quantity pairs allows to create a plurality of electronic bidding information with a price-quantity relationship thereby making data entry more efficient. Creating the electronic bidding data is less time-consuming and requires less computer resources as compared to purely numerical bidding based on singular price-quantity combinations. It may allow a user to create a plurality of price-quantity combinations lying on the interpolated price-quantity curve without having to input these data points separately. Using the visual display to display a graphical representation assists the user to quickly grasp the nature of the data to make a decision to either approve the data or modify it. The price-quantity curve can be modified by manipulating its graphical representation.

The manipulation of the graphical representation may include dragging and dropping at least a part of the price-quantity curve to a different location thereby changing the position and/or shape of the price-quantity curve. The user may change his/her strategy by selecting the entire curve, parts of the curve or specific price-quantity combinations lying on the curve and move them to a different location thereby changing either the price, the quantity or both. By dragging and dropping the end points of the price-quantity curve, the user may extend or shorten the price-quantity curve. All modifications are displayed back to the user in near real-time via the visual user interface.

The manipulation of the graphical representation may include adding or deleting price-quantity pairs graphically. The user may select and delete certain parts or individual price-quantity pairs of the price-quantity curve. Alternatively, the user may click and add new price-quantity pairs graphically to modify the curvature of the price-quantity curve.

The graphical representation may include a price axis and a quantity axis. In a typical graph, the horizontal axis is used to indicate the quantity and the vertical axis is used to indicate the price. Plotting the axes allows the user to quickly grasp the nature of the displayed representation of the price-quantity curve and its modification.

The method may further comprise modifying the price-quantity curve responsive to entering additional input data or changing input data numerically via the visual user interface. The visual user interface may be configured to accept numeric data entry by allowing a user to change the input data or add one or more new price-quantity pair(s) or new line segment equation(s). Based on the numeric data entry, the graphical representation of the price-quantity curve can be modified by calculating changes of the line segment equation(s) based on the additional input data.

The price-quantity curve may be a Bezier curve, wherein the first and second price-quantity pairs may serve as end points. The benefit of Bezier curves is that these curves are indefinitely scalable and thus never need to be rounded. Any portion of a Bezier curve is easily modifiable independently of other portions. Thereby amendment of the price-quantity curve is simplified and provides the user with intuitive forms of interaction.

The price-quantity pairs may be numerically displayed when moving or hovering a computer cursor over the graphical representation of the price-quantity curve. Thereby the user can easily grasp the absolute values of the price-quantity curve in addition to the relative price-quantity relationship. This features may also assist the user in selecting a part of the curve that he wishes to modify and dragging it to a specific position.

The input data may be entered by the user numerically or graphically via the visual user interface. The same user interface that is used to display the graphical representation of the price-quantity curve can be used to enter the input data by the user. Thereby it can be ensured that only price-quantity combinations are entered that conform to minimum requirements for the electronic bidding process.

The method may further include updating the price-quantity curve based on fluctuations of a selected reference value, wherein preferably the updating of the price-quantity curve is restricted to predetermined or selected static limits. A dynamic price-quantity may be automatically adjusted based on fluctuations of a selected reference value over time. This replaces the need to monitor and renew the price-quantity curve during an ongoing auction.

The price-quantity curve may correspond to one or more line segment equations. Each price-quantity curve may be calculated through interpolation and stored as one or more line segment equations. User-induced modifications of the price-quantity curve result in calculated changes of the line segment equations for the user's price-quantity curve.

The method may further include submitting the price-quantity curve as a bid line or an ask line in an electronic auction. The method may further allow to modify a submitted bid line or ask line before or during the ongoing auction via the visual user interface.

In a second aspect, the present disclosure provides a computer-implemented method for matching electronic bidding data for electronic auctions in which multiple quantities are offered, wherein preferably the electronic bidding data has been created according to the method of the first aspect, the method comprising: creating an aggregated bid line by adding up two or more bid lines each corresponding to a price-quantity curve; determining an intersection between the aggregated bid line and an ask line, wherein the intersection indicates a price line; and computing matches between each of the two or more bid lines and the price line. Matching electronic bidding data with a price-quantity relationship allows for a more accurate bidding process in which allocative inefficiencies are remedied.

The method may further include determining a modified price line for one or more bid lines based on the price line and a price discount, and computing matches between the one or more bid lines and the modified price line. If during, before or after the closing of an auction, a bidder-user receives a price discount (for either a given quantity or unlimited quantity), a new point on bid line is determined at the level of the modified price line, so both price and quantity are different for that bidder-user. The price for all bidder-users likely increases as the favoured bidder-user takes a larger quantity, leaving less for the others.

In a third aspect, the present disclosure provides a data processing apparatus comprising means for carrying out the method of the first and/or second aspect.

In a fourth aspect, the present disclosure provides a computer program comprising instruction which, when the program is executed by a computer, cause the computer to carry out the steps of the method of the first and/or second aspect.

In a fifth aspect, the present disclosure provides an interactive display for creating electronic bidding data in electronic auctions in which multiple quantities are offered, comprising a user interface configured to receive input data from a user, wherein the input data comprises at least a first price-quantity pair and a second price-quantity pair, interpolate a price-quantity curve between the first and second price-quantity pairs, display a graphical representation of a price-quantity curve, and modify the price-quantity curve responsive to manipulation of the graphical representation by the user. The interactive display can be developed further by the features which are described in connection with the method of the first aspect.

In a sixth aspect, the present disclosure provides a matching engine for matching electronic bidding data in electronic auctions in which multiple quantities are offered, wherein preferably the electronic bidding data has been created using the interactive display according to the fifth aspect, wherein the matching engine is configured to create an aggregated bid line by adding up two or more bid lines each corresponding to a price-quantity curve; determine an intersection between the aggregated bid line and an ask line, wherein the intersection indicates a price line; and compute matches between each of the two or more bid lines and the price line. The matching engine can be developed further by the features which are described in connection with the method of the second aspect.

In a seventh aspect, the present disclosure provides an electronic auction system for electronic auctions in which multiple quantities are offered, comprising at least one interactive display according to the fifth aspect and/or the matching engine according to the sixth aspect.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1 illustrates a distributed system architecture for conducting electronic auctions in which multiple quantities are offered;

Figure 2 shows a graphical representation of a) a number of auction bids submitted by a bidder and (b) a mismatch between the auction bids from a) and a price decision made by a seller in an electronic auction in which multiple quantities are offered according to the prior art;

Figure 3 shows a graphical representation of a price-quantity curve with a straight shape;

Figure 4 is a flow chart illustrating a series of steps that may be performed in a method for creating electronic bidding data for electronic auctions in which multiple quantities are offered;

Figure 5 shows manipulation of a graphical representation of a price-quantity curve with a straight shape to a price-quantity curve with an angled shape;

Figure 6a and 6b show two graphical representations of price-quantity curves with curved shape;

Figure 7 shows a graphical representation of a price-quantity curve that is updated based on fluctuations of a selected reference value;

Figure 8 shows a flow chart illustrating a series of steps that may be performed in a method for matching electronic bidding data for electronic auctions in which multiple quantities are offered;

Figure 9 illustrates how an aggregated bid line is created based on two bid lines each corresponding to a price-quantity curve;

Figure 10 illustrates a graphical representation of an ask line with a) a straight shape and b) a break at a chosen quantity;

Figure 11 illustrates how matches between asks and bids are computed based on a price line for a) a first bid line, b) a second bid line and c) an aggregated bid line;

Figure 12 corresponds to the scenario depicted in Figure 11, wherein one bidder-user receives a price discount from the seller-user, wherein the price discount does not change the allocation; and

Figure 13 corresponds to the scenario depicted in Figure 12, wherein the price discounts for the one bidder-user changes the allocation.

Common reference numerals are used throughout the figures to indicate similar features.

Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

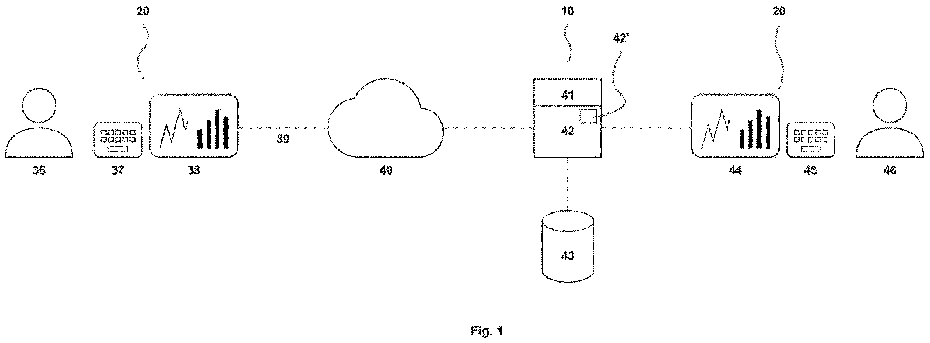

Figure 1 generally illustrates a distributed system architecture for conducting electronic auctions in which multiple quantities are offered. Electronic auction systems typically comprise two main elements: A core auction engine 10 and at least one (external) user interface 20. As depicted in Figure 1, the core auction engine 10 comprises a server 42 including a matching engine 42', software 41 and a storage unit 43 responsible for data storage. The server 42 is responsible for receiving user input, controlling the user interface and execution of an auction method. For the latter purpose, the server 42 includes matching engine 42' for efficient bid processing and matching buy and sell orders. The external (or remote) user interface 20, such as an interactive display, may include a display screen 38, 43 and an input device 37, 44. The external user interface 20 can be used to create and submit electronic bidding data, or to display and monitor ongoing auctions in near real time.

In the present case, a seller-user 36 provides electronic bidding information concerning items to be sold via the user interface 20. For example, by entering information via the input device 37 and/or display 36. Such information is communicated via a network connection 39 to a cloud 40, from where it is processed by the software 41 on the host's server 42, and stored in the storage unit 43. When requested, this information is retrieved from storage unit 43 by the software 41 on the server 42 which then communicates it to the bidder-user 45 via a network connection. The bidder-user 45 provides electronic bidding information concerning the items to be purchased via the user interface 20. For example, by entering information via the input device 44 and/or display 43. Such information is communicated via a network connection to the server 42, processed by the software 41 and stored in the storage unit 43. When requested, this information is retrieved from storage by the software on the server which then communicates it to the seller-user 36 or makes it available for use by the matching engine 42'.

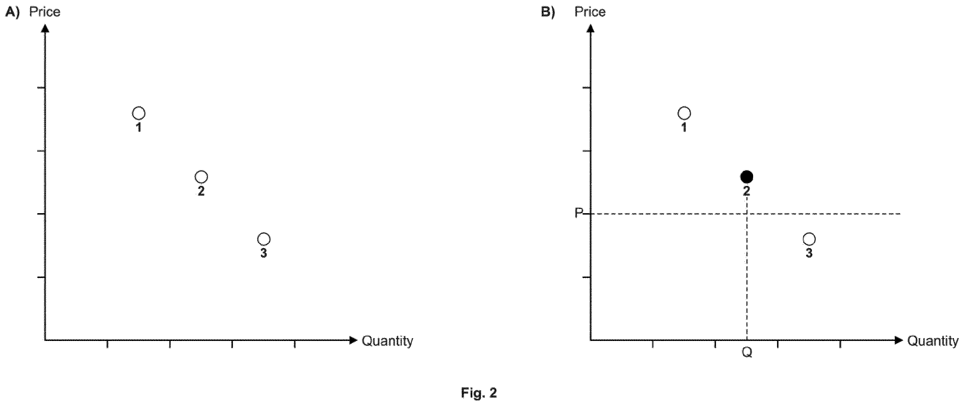

Figure 2 illustrates a scenario in an electronic auction in which multiple quantities are offered according to the prior art. In Figure 2a three distinct auction bids 1-3 are plotted in a graph with price represented on the vertical axis and quantity represented on the horizontal axis. Each auction bid 1-3 corresponds to a price-quantity combination/pair. Each auction bid 1-3 indicates the quantity a bidder wishes to buy for a certain price. Each price-quantity pair can be described as a 'bid point' in the sense that it is a singular price proposal for a given quantity value (x items for y price). It can be deduced from the position of the bid points 1-3 in Figure 2a that the bidder is willing to purchase larger quantities if the price per item is lower.

If a bidder wants to buy a certain quantity at a certain price and a seller wants to sell the same quantity at the same price, their orders match and a transaction can be effected. However, it is a matter of chance whether the ultimate price-quantity combination is a match with the desired price-quantity combination. In reality, a desired price-quantity combination may not be perfectly aligned with a quantity or price decision made by the seller. In Figure 2b, a scenario is depicted in which an ultimate price is set by a seller which is indicated as a price line P (dotted line). The price line P does not provide an intersection with any of the bid points 1-3 provided by the bidder. In particular, bid point 2 being the nearest in price to the sell price does not match with an eventual price-quantity intersection. Accordingly, the orders do not match and depending on the nature of the bid, the bidders are often allocated less or more than their optimum quantity. Bidders can only guesstimate how many items they will eventually be allocated, and at what price.

In prior art systems, in which purely numerical bidding based on singular bid points is implemented, the bids need to be manually revised during the auction, to respond to auction dynamics. Oftentimes it is necessary to monitor and renew bids during the ongoing auction and, if available, with respect to guidance from the seller. Specifically due to the low information density of specific 'bid points', revision to respond to perceived movements in the market during the ongoing auction is necessary.

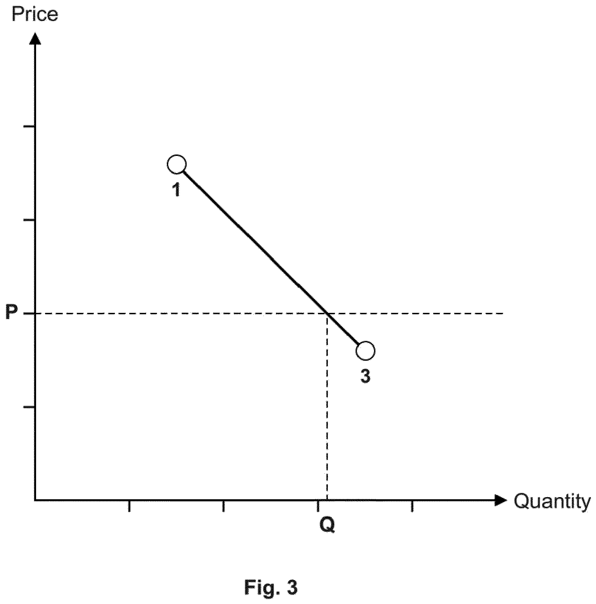

As a solution to the shortcomings of the prior art, a computer-implemented method for creating electronic bidding data for electronic auctions in which multiple quantities are offered is presented. The method allows to create a price-quantity curve as depicted in Figure 3. A price-quantity curve allows to place auction bids or asks with a price-quantity relationship. The use of auction bids indicating a price-quantity relationship allows an efficient data input in combination with a more accurate bidding process.

As depicted in Figure 3, the price-quantity curve 30 is a straight line interpolated between two singular price-quantity pairs 1, 3. The price-quantity pairs 1, 3 indicate the end points of the price-quantity curve 30. For a sale prize P set by a seller, the price-quantity curve and the price line P provide an intersection as indicated by the dotted lines. The intersection defines a specific price-quantity combination (P, Q). Accordingly, placing an auction bid in the form of a price-quantity curve replaces the need to place a plurality of singular auction bids each corresponding to a price-quantity pair and at the same time makes bid renewal during the ongoing auction redundant.

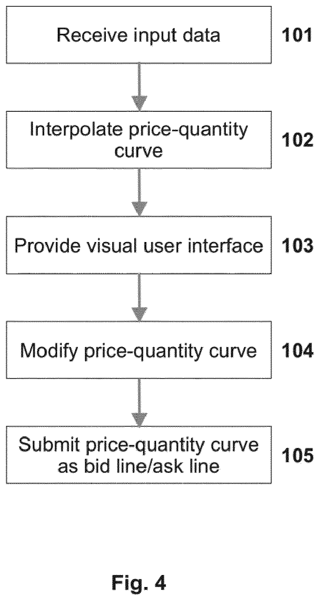

Figure 4 illustrates a series of steps that may be performed for creating electronic bidding data for electronic auctions in which multiple quantities are offered. Accordingly, in step 101 input data from a user is received. The input data comprises at least two price-quantity pairs, such as e.g. bid points 1 and 3 depicted in Figure 3. In step 102, a price-quantity curve between the price-quantity pairs is generated through interpolation. In step 103, a visual user interface is provided that displays a graphical representation of the price-quantity curve. In step 104, the price-quantity curve is modified in response to manipulation of the graphical representation by the user. In step 105, the price-quantity curve is submitted as a bid line or an ask line in an electronic auction in which multiple quantities are offered. The method allows to place a bid line or ask line comprising a plurality of price-quantity pairs at the same time which significantly reduces time-consuming input transactions and requires less computer resources.

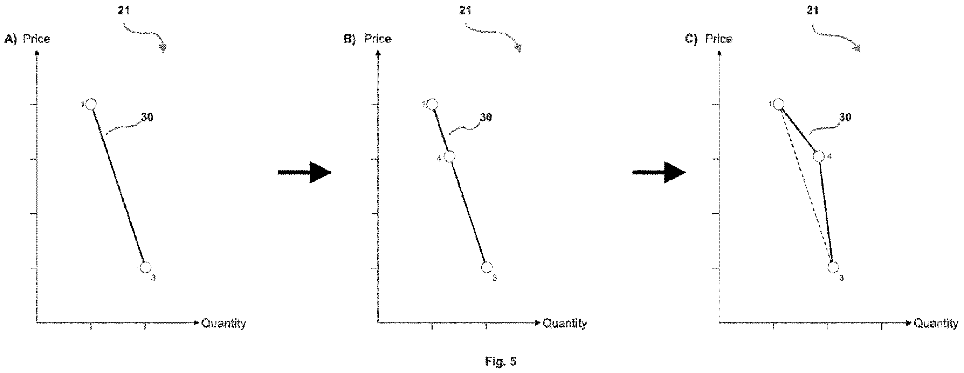

Figure 5 shows examples of visual user interfaces 21 that are used for manipulating a graphical representation of a price-quantity curve 30. The price-quantity curve 30 of Figure 5a corresponds to a linear interpolation between two price-quantity pairs 1, 3. Accordingly, this initial price-quantity curve 30 is a straight interpolated line. However, other forms of interpolation, such as polynomial interpolation, can be used. Other parametric curves, such as Bezier interpolating curves, can also be used. A linear Bezier curve is equivalent to the linear interpolation as depicted in Fig. 5, wherein the price-quantity pairs 1, 3 serve as control points and the resulting Bezier curve is a straight line between those two end points. Bezier curves can be defined for any degree, such as linear, quadratic and cubic Bezier curves.

The interpolated price-quantity curve 30 is an interactive graphical user interface 'GUI' object that can be displayed and modified via an interactive display. An interactive display provides an improved level of interactivity for the user and reduces the total amount of interaction steps necessary. Each price-quantity curve 30 may be calculated and stored as one or more line segment equations. User-induced modifications of the representation of the price-quantity curve result in calculated changes of the line segment equations for the user's price-quantity curve.

One way to modify the graphical representation of price-quantity curve 30 is by selecting a part of the curve, such as bid point 4 in Figure 5b. Bid point 4 is then dragged and dropped at a different position that corresponds to a different price-quantity combination, see Figure 5c. The modified price-quantity curve 30 is angled and comprises two sections with a different slope. By dragging and dropping the curve itself, the user can alter his/her strategy by changing either the price, the quantity or both. In this manner, a user can tailor the auction bid by amending the direction, steepness and/or curvature of the price-quantity curve depending on his/her strategy. The user interface and the displayed price-quantity curve assist the user in performing the technical task of creating electronic bidding data including a price-quantity relationship. This allows efficient data input in combination with a more accurate bidding process in electronic auctions.

Alternatively, the user may graphically enter additional explicit price-quantity pairs which provide new angles to the existing price-quantity curve. In this case, the shape or steepness of the curve will automatically be adapted. If the additional price-quantity pair falls outside the existing price-quantity curve, the new price-quantity pair will become the endpoint. Alternatively, the user may drag and drop the explicit price-quantity pairs defining the ends of the price-quantity curve and thereby extend or shorten the price-quantity curve. The amendment is displayed in form of a modified price-quantity curve to the user in near real time. To assist the user to create the electronic bidding data, reference data may be included, such as an advised price-quantity curve.

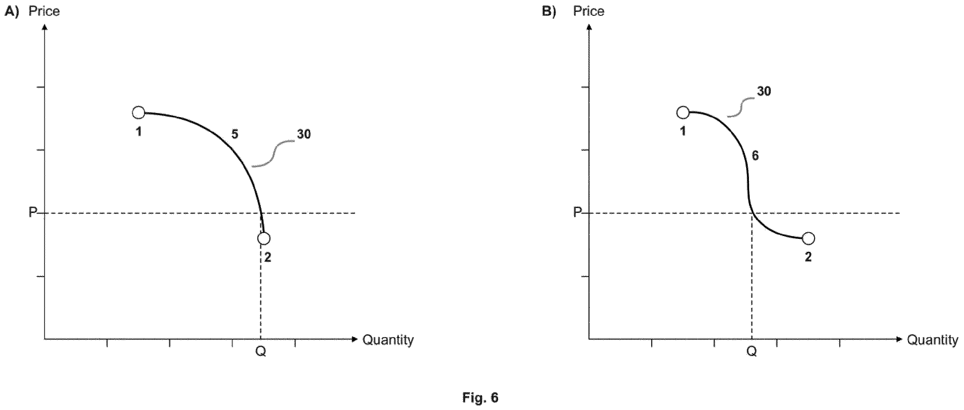

In Figure 6, two examples of a price-quantity curve 30 with a curved shape are depicted. Both price-quantity curves 5, 6 were generated through interpolation based on the same input data, namely bid points 1 and 2. Both price-quantity curves 30 were subsequently modified by manipulating the graphical representation via a user interface. Both price-quantity curves 30 have an intersection with a set price P by a seller, however, the intersections are at different quantities Q. Accordingly, the shape of the curve and thus the electronic bidding information can be tailored as desired by the user.

The price-quantity curves 30 in Figure 6 are Bezier curves, the benefit of which is that said curves are indefinitely scalable and thus never need to be rounded. This may be an important consideration when significant sums of money are at stake. Additionally, any portion of a Bezier curve is easily modifiable independently of other portions, making any miscellaneous bidder strategy easy to implement. The simplicity of amendment of the curve provides the users with intuitive forms of interaction.

In addition, price-quantity combinations may be updated based on fluctuations of a selected reference value. In other words, a dynamic is added to the specified price-quantity combination that allows to automatically adjust the price over time. Such a dynamic allows for more flexibility and removes the need to continuously consult third party sources as well as repeatedly re-enter electronic bidding data such as bids or asks. One example for a bid that is made in relation to a reference is a bid for a new bond which is made dependent upon a risk-free curve, such as a government bond or interest rate swap-curve. Another example is an auction bid for a new bond which is made dependent upon (a yield curve of) existing bonds in the market, for instance an issuer-yield curve, an industry yield curve, or a credit-rating yield curve (being a yield curve for identically rated bonds). Another example is a bid for a supply of crude oil, which is made dependent upon the marked price for crude oil of a certain quality.

Such a computer-implemented method that updates price-quantity combinations based on fluctuations of a selected reference value can be considered to provide an individual inventive contribution of its own, even without the auction bid being a price-quantity curve.

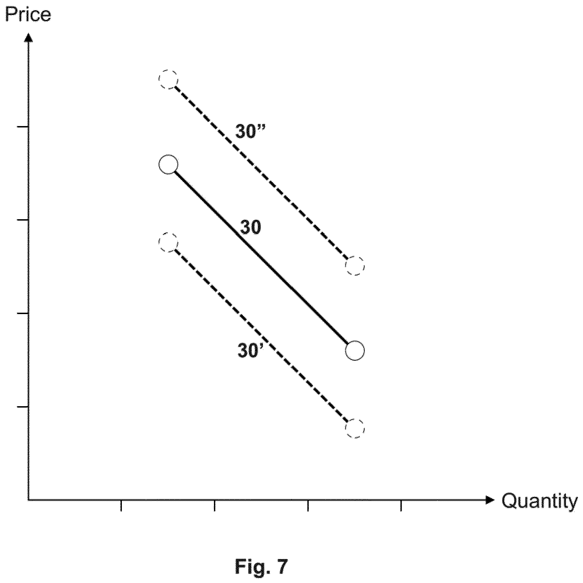

In the example depicted in Figure 7, price-quantity curve 30 may either move upwards or downwards according to fluctuations in a chosen reference value. The price-quantity curve 30 may be updated continuously or after predefined time intervals. At the moment of closure of the auction, the price-quantity curve 30 may freeze, i.e. no longer be updated to account for changes in the selected reference value. Furthermore, a user may provide static limits 30', 30" to the dynamic price-quantity curve to indicate a maximum fluctuation until which the bid or ask stands.

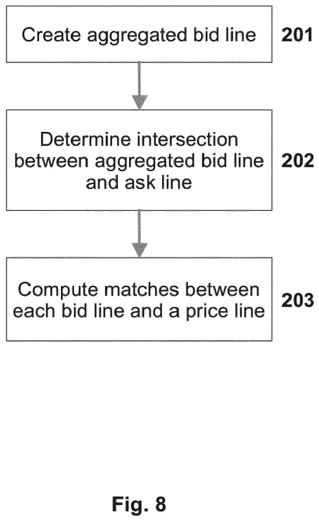

Figure 8 illustrates a series of steps that may be performed for matching electronic bidding data for electronic auctions in which multiple quantities are offered. In step 201, an aggregated bid line is created by adding up two or more bid lines each corresponding to a price-quantity curve. In step 202, an intersection between the aggregated bid line and an ask line is determined, wherein the intersection indicates a price line. In step 203, matches between each of the two or more bid lines and the price line are computed. The method is based on the idea to submit price-quantity curves instead of singular price-quantity combinations as auction bids or asks. As previously explained such price-quantity curves can easily be amended via the user interface even during an ongoing auction. The use of auction bids and asks (bid lines and ask lines) with a price-quantity relationship leads to a more accurate bidding process which remedies allocative inefficiencies present in the prior art. The electronic bidding data may be created according to the previously described method for creating electronic bidding data for electronic auctions in which multiple quantities are offered (see e.g. Figure 4). However, the electronic bidding data in the form of a bid line and/or an ask line may also be entered as one or more line segment equation(s) corresponding to a price-quantity curve via the user interface 20 (see e.g. Figure 1) or an application programming interface (API).

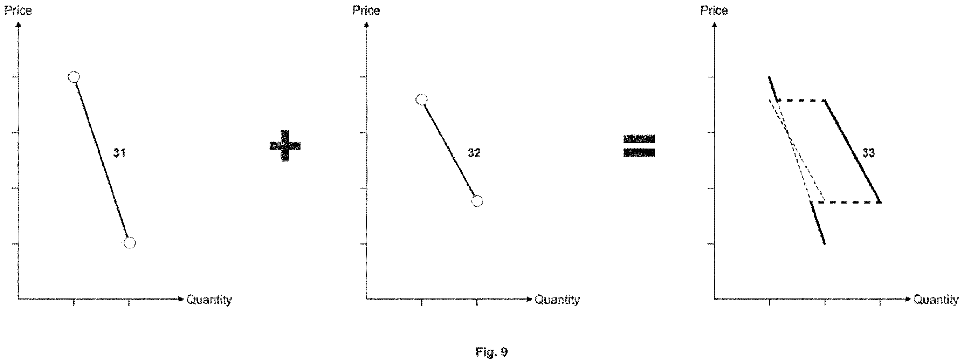

Figure 9 illustrates how an aggregated bid line is created. An aggregated bid line may reflect all the pending bids in an electronic auction. An aggregated bid line is a summation of all individual bid lines and thus can be a complex combination of line segment equations. A first bid line 31 and a second bid line 32 are added up to create an aggregated bid line 33. The first and second bid lines 31, 32 each correspond to price-quantity curves with a straight shape. However, the end points of the first and second bid lines 31, 32 as well as their slopes are different. Due to these differences the aggregated bid line 33 contains breaks indicated by the horizontal dashed lines. The aggregated bid line 33 adds up the bids for all quantities at each price. Accordingly, the aggregated bid line 33 has a different shape as the individual bid lines 31, 32. The aggregated bid line 33 may be continuously updated to account for changing, new or removed bid lines. The aggregated bid line 33 may also be updated to reflect the dynamic of certain individual bid lines. The aggregated bid line 33 may or may not be displayed to bidder- and/or seller-users. Visual comparison between the aggregated bid line 33 and an ask line may provide graphic clarity about the auction status to the users.

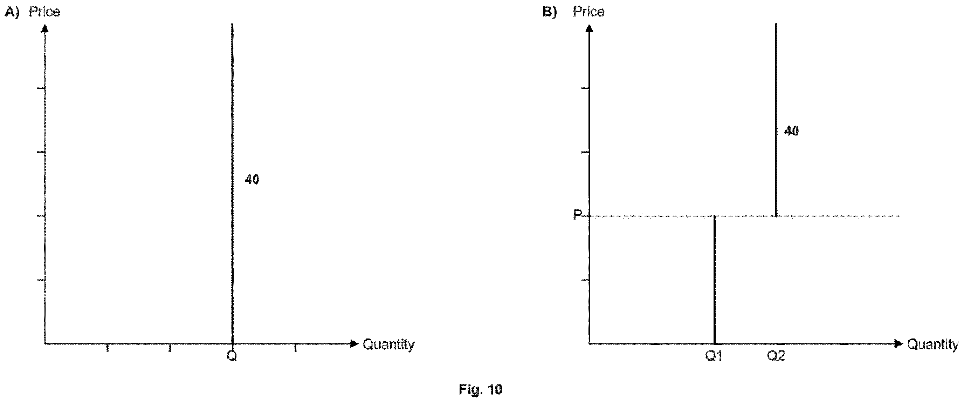

Figure 10 illustrates two exemplary ask lines 40 submitted in an electronic auction in which multiple quantities are offered. Ask lines 40 are price-quantity curves submitted by a seller-user that can be created according to the previously described method for creating electronic bidding data. In this case, seller-users input price-quantity pairs relating to specific ask points based on which a price-quantity curve is interpolated. The seller-user is then similarly provided with a visual interface displaying a graphical representation of the price-quantity curve and can modify the curve by manipulating the graphical representation. The modified price-quantity curve can be submitted as an ask line in an electronic auction and amended during the ongoing auction. The ask line 40 as depicted in Figure 10a is a continuous straight line. The ask line 40 as depicted in Figure 10b contains a break therein to indicate that higher quantities are sold at a higher price. The break can be created graphically using the visual user interface by selecting a price-quantity point of the price-quantity curve and dragging it towards a position with the same price (P), but a different quantity (Q1, Q2).

Optionally, an ask line or a fraction of an ask line corresponding to an individual bid line may be visually displayed to the bidder-users during the auction via the visual user interface. Typically ask lines are for entire quantities on offer and only proportionally smaller parts thereof will intersect with the individual bid lines.

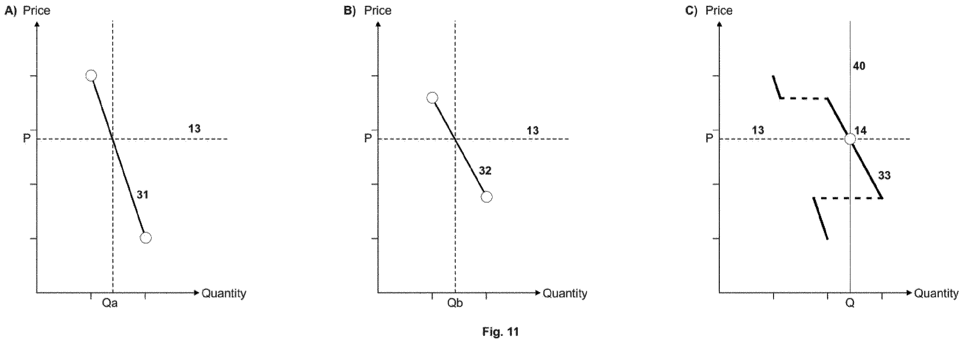

The matching process of electronic bidding data for electronic auctions in which multiple quantities are offered is described with reference to Figure 11. This process is carried out by the matching engine, such as matching engine 42' depicted in Figure 1. To determine an intersection between the aggregated bid line 33 and the ask line 40 in a first step, the respective line equations (or line segment equations) are solved to find the intersection point(s). To compute matches between each bid line and a price line in a second step, the respective line equations (or line segment equations) are solved to find the intersection point(s). The matching process is carried out in near-real time. The matching step is repeated each time a bid line is entered or modified, and/or each time a dynamic bid line changes. The outcome of the matching in the first step is an intersection point 14 called the nexus point indicating a specific price-quantity combination. The price of the nexus point determines a price line (P), wherein the price line is a line of equal price for all quantities equal to or less than the quantity of the nexus point. The price line (P) intersects individual bid lines, wherein the intersection determined in the second step indicates a provisional quantity for each bidder-user. If no further changes occur during the auction, the provisional quantity will become the allocated quantity.

According to the example of Figure 11, bid line 31 depicted in Figure 11a and bid line 32 depicted in Figure 11b have been added up to create aggregated bid line 33 depicted in Figure 11c. In one example, the aggregated bid line 33 is calculated by summation of all the individual bid line segment equations (and modified bid lines due to a price discount). The aggregated bid line 33 contains breaks indicated by the dashed line in the horizontal sections of the aggregated bid line 33. An ask line 40 submitted by a seller-user intersects with aggregated bid line 33 at an intersection 14, the so called nexus point, see Figure 11c. To determine the intersection, the coordinates of the intersection are calculated by solving the line equations (or line segment equations), for example using Euclidean geometry for line-line intersection, thereafter verifying that the calculated coordinates of the intersection actually form part of both lines or (or line segments). Based on the nexus point 14, a price line 13 indicating a price level is generated. Price line 13 indicates a price level P. To compute the matches between each bid line 31, 32 and the price line 13, the intersections between the price line 13 and the individual bid lines 31 and 32 are determined, see Figs. 11a and 11b. Again, to determine the intersection, the coordinates of each intersection are calculated by solving the line equations (or line segment equations), for example using Euclidean geometry for line-line intersection, thereafter verifying that the calculated coordinates of the intersection actually form part of both lines or (or line segments). Based on the determined intersections, the bidder of bid line 31 is allocated quantities Qa at price P and the bidder of bid line 32 is allocated quantities Qb at the same price P.

If no intersection point is found, for instance because insufficient bid lines have been placed for the aggregated bid line to intersect with the ask line, no price line is calculated. As soon as sufficient quantity has been bid for to result in a nexus point outcome of the bid-ask (line segment equation) matching, the price line is calculated. If, in rare cases, more than one nexus point is found by the matching engine, the point with the highest price is the point used to generate the price line, unless the asker/seller specifically provides input to not do so.

The price-line functionality allows the computation of matches between bid and ask values accounting for the final sale price denoted by the ask line. To highlight matching of the aggregated bid line 33 and the ask line 40, the intersection point can be visually highlighted as the nexus point 14 and presented to the users. The price levels at which nexus points are located may be visualized by a price line 13.

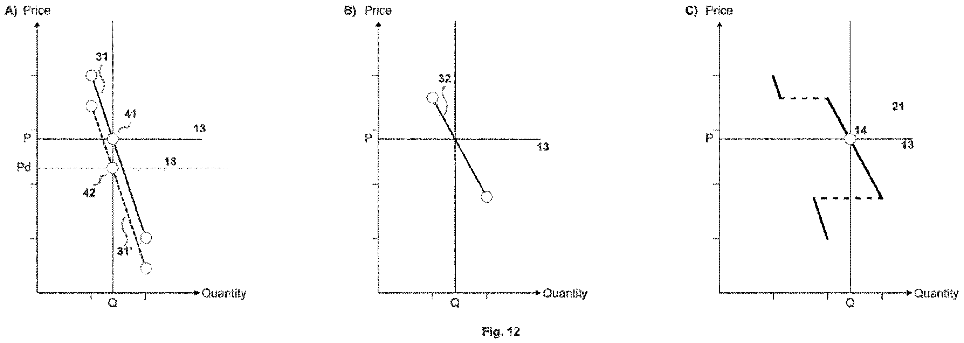

Figure 12 shows a scenario where one bidder-user receives a price discount from the seller-user, wherein the price discount does not change the allocation. The price discount may be an equation, such as price - 10 % for Q = {0-$Q_{max}$}. For example, if bidder-user of bid line 31 receives a price discount, he/she will not be awarded the quantity Q at the price P corresponding to intersection point 41 between the price line P (reference numeral 13) and the bid line 31 as depicted in Figure 12a. Instead, the intersection point 41 is reduced taking into account the price discount to intersection point 42 based on a modified price line Pd (reference numeral 18) and a modified bid line 31'. Accordingly, if during, before or after the closing of the auction, a bidder-user receives a price discount (for either a given quantity or unlimited quantity), his bid line changes. In the case of a simple price discount, the bidder-user of bid line 31 is awarded (the same) quantity Q at the discounted price Pd. In this scenario, there are no changes in the allocation for the other bidder-users. As depicted in Figure 12b, bidder-user of bid line 32 will still be awarded quantity Q at the price P.

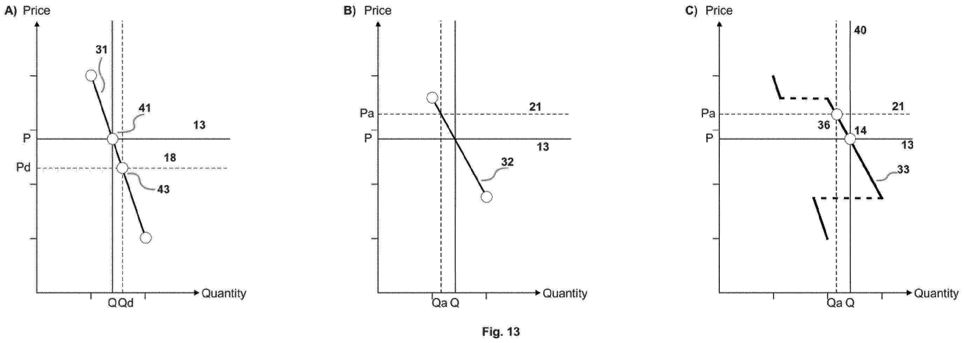

Figure 13 shows a scenario where one bidder-user receives a price discount from the seller-user, wherein the price discount changes the allocation. To this end, a modified price line for one or more bid lines is determined and matches between the one or more bid lines and the modified price line are computed in a similar manner as previously described. A modified price line may be an equation of the type P-10 % relating to the price line P. For example, if bidder-user of bid line 31 receives a price discount, he/she will not be awarded the quantity Q at the price P corresponding to intersection point 41 between price line 13 and bid line 31 as depicted in Figure 13a. If a discounted price is provided to the bidder-user of bid line 31, which is indicated by modified price line Pd (reference numeral 18) in Figure 13a, he/she will be awarded the quantity Qd at the discounted price Pd according to a new intersection point 43 between the modified price line 18 and bid line 31. In this case, both P and Q change along the bid line 31 to where the modified price line 18 intersects with the bid line 31. The computation of matches between the modified price line 18 and bid line 31 is carried out as previously described by solving the line equations (or line segment equations) to find the intersection point 43.

As a result, the price for other bidder-users likely increases as the favoured bidder takes a larger quantity, leaving less for the others. Since the price discount changes the allocations for the discounted bidder, it changes them for all bidder-users. The price discount for one bidder-user likely drives up the price incrementally to a modified price line Pa (reference numeral 21 in Figure 13b and c) as the intersection point 36 between aggregated bid line 33 and the ask line 40 changes to accommodate the price discount for the discounted bidder-user including the changes in allocation. This results in an adjustment of the price line 13 to modified price line 21 (see Pa in Figs 13b and c), which affects the overall prices and corresponding quantities. As a result, the bidder-user of bid line 32, receives quantities Qa at price Pa instead of quantities Q at price P.

In the embodiment described above the server may comprise a single server or network of servers. In some examples the functionality of the server may be provided by a network of servers distributed across a geographical area, such as a worldwide distributed network of servers, and a user may be connected to an appropriate one of the network of servers based upon a user location.

The above description discusses embodiments of the invention with reference to a single (bidder- and/or seller-) user for clarity. It will be understood that in practice the system may be shared by a plurality of users, and possibly by a very large number of users simultaneously.

The embodiments described above are fully automatic. In some examples a user or operator of the system may manually instruct some steps of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Progrmmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

**EP 4 163 859 A1**

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1.   A computer-implemented method for creating electronic bidding data for electronic auctions in which multiple quantities are offered, the method comprising:

   receiving (101) input data from a user, wherein the input data comprises at least a first price-quantity pair (1) and a second price-quantity pair (3);
   interpolating (102) a price-quantity curve (30) between the first and second price-quantity pairs (1, 3);
   providing (103) a visual user interface (21) displaying a graphical representation of the price-quantity curve (30); and
   modifying (104) the price-quantity curve (30) responsive to manipulation of the graphical representation by the user.

2.   The computer-implemented method of claim 1, wherein manipulation of the graphical representation includes dragging and dropping at least a part of the price-quantity curve (30) to a different location thereby changing the position and/or shape of the price-quantity curve and/or adding or deleting price-quantity pairs graphically, wherein preferably the graphical representation includes a price axis and a quantity axis.

3.   The computer-implemented method of claim 1 or 2, wherein the price-quantity curve corresponds to one or more line segment equation(s), wherein manipulation of the graphical representation by the user leads to a calculated change in the one or more line segment equation(s).

4.   The computer-implemented method of any of the preceding claims, further comprising:
   modifying the price-quantity curve (30) responsive to entering additional input data or changing input data numerically via the visual user interface (21).

5.   The computer-implemented method of any of the preceding claims, wherein the price-quantity curve (30) is a Bezier curve, wherein the first and second price-quantity pairs (1, 3) serve as end points.

6.   The computer-implemented method of any of the preceding claims, wherein the price-quantity pairs are numerically displayed when moving or hovering a computer cursor over the graphical representation of the price-quantity curve; and/or wherein the input data is entered by the user numerically or graphically via the visual user interface (21).

7.   The computer-implemented method of any of the preceding claims, further including:
   updating the price-quantity curve (30) based on fluctuations of a selected reference value, wherein preferably the updating of the price-quantity curve is restricted to predetermined or selected static limits (30', 30").

8.   The computer-implemented method of any of the preceding claims, further including:
   submitting (105) the price-quantity curve as a bid line (31, 32) or an ask line (40) in an electronic auction.

9.   A computer-implemented method for matching electronic bidding data for electronic auctions in which multiple quantities are offered, wherein preferably the electronic bidding data has been created according to the method of claim 8, the method comprising:

creating (201) an aggregated bid line (33) by adding up two or more bid lines (31, 32) each corresponding to a price-quantity curve;

determining (202) an intersection (14) between the aggregated bid line (33) and an ask line (40), wherein the intersection (14) indicates a price line (P); and

computing (203) matches between each of the two or more bid lines (31, 32) and the price line (P).

10. The method of claim 9, further comprising:

determining a modified price line (18) for one or more bid lines (31, 32) based on the price line (P) and a price discount; and

computing matches between the one or more bid lines (31, 32) and the modified price line (18); and/or

wherein the two or more bid lines, the aggregated bid line, the ask line, the price line and/or the modified price line correspond to one or more line segment equation(s), wherein preferably the steps of determining an intersection and/or computing matches include solving the line segment equations (or line segment equations) to find intersection point(s).

11. A data processing apparatus comprising means for carrying out the method of any of the preceding claims.

12. A computer program comprising instruction which, when the program is executed by a computer, cause the computer to carry out the steps of the method of any of the preceding claims.

13. An interactive display for creating electronic bidding data in electronic auctions in which multiple quantities are offered, comprising a user interface configured to

receive input data from a user, wherein the input data comprises at least a first price-quantity pair (1) and a second price-quantity pair (3),

interpolate a price-quantity curve (30) between the first and second price-quantity pairs (1, 3),

display a graphical representation of a price-quantity curve (30), and

modify the price-quantity curve responsive to manipulation of the graphical representation by the user.

14. A matching engine (42') for matching electronic bidding data in electronic auctions in which multiple quantities are offered, wherein preferably the electronic bidding data has been created using the interactive display of claim 13, wherein the matching engine is configured to

create an aggregated bid line (33) by adding up two or more bid lines (31, 32) each corresponding to a price-quantity curve;

determine an intersection (14) between the aggregated bid line (33) and an ask line (40), wherein the intersection (14) indicates a price line (P); and

compute matches between each of the two or more bid lines (31, 32) and the price line (P).

15. An electronic auction system for electronic auctions in which multiple quantities are offered, comprising at least one interactive display according to claim 13 and/or the matching engine according to claim 14.

Fig. 1

**A)** Price

1

2

3

Quantity

**B)** Price

1

2

P

3

Q

Quantity

**Fig. 2**

14

Fig. 3

| Receive input data | 101 |

↓

| Interpolate price-quantity curve | 102 |

↓

| Provide visual user interface | 103 |

↓

| Modify price-quantity curve | 104 |

↓

| Submit price-quantity curve as bid line/ask line | 105 |

**Fig. 4**

A) Price ... B) Price ... C) Price

21 30

Quantity

Fig. 5

**A)** Price

1

5

30

P

2

Quantity

Q

**B)** Price

30

1

6

P

2

Quantity

Q

**Fig. 6**

EP 4 163 859 A1

Fig. 7

Create aggregated bid line    **201**

Determine intersection
between aggregated bid line    **202**
and ask line

Compute matches between
each bid line and a price line    **203**

**Fig. 8**

Fig. 9

**Fig. 10**

EP 4 163 859 A1

C) Price

40

14

33

13

P

Q

Quantity

B) Price

13

32

P

Qb

Quantity

A) Price

13

31

P

Qa

Quantity

Fig. 11

Fig. 12

24

A) Price

B) Price

C) Price

Fig. 13

Europäisches
Patentamt

European
Patent Office

Office européen
des brevets

# EUROPEAN SEARCH REPORT

**Application Number**

EP 21 20 1736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DECK CARY ET AL: "Auctions in near-continuous time", EXPERIMENTAL ECONOMICS, SPRINGER US, BOSTON, vol. 23, no. 1, 27 February 2019 (2019-02-27), pages 110-126, XP037001302, ISSN: 1386-4157, DOI: 10.1007/S10683-019-09603-4 [retrieved on 2019-02-27] * the whole document * | 1-15 | INV. G06Q40/04 |
| X | US 2016/232603 A1 (HOLMBERG PÄR O [SE] ET AL) 11 August 2016 (2016-08-11) * paragraph [0272] * | 1-15 | |

TECHNICAL FIELDS SEARCHED (IPC)

G06Q

The present search report has been drawn up for all claims

| Place of search | Date of completion of the search | Examiner |
|---|---|---|
| The Hague | 19 April 2022 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 1736

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2022

| Patent document cited in search report | Publication date | Patent family member(s) | Publication date |
|---|---|---|---|
| US 2016232603 A1 | 11-08-2016 | NONE | |

For more details about this annex : see Official Journal of the European Patent Office, No. 12/82